Europäisches Patentamt

European Patent Office

Office européen des brevets

Publication number: **0 285 887**

**A2**

# EUROPEAN PATENT APPLICATION

Application number: 88104414.3

Date of filing: 19.03.88

Int. Cl.⁴ **B01J 8/04** , //C01C1/04

Priority: 25.03.87 CH 1130/87

Date of publication of application:
**12.10.88 Bulletin 88/41**

Designated Contracting States:
**AT DE ES FR GB GR IT NL**

Applicant: **AMMONIA CASALE S.A.**
**Via della Posta 4**
**CH-6900 Lugano(CH)**

Applicant: **Zardi, Umberto**
**Via Lucino 57**
**CH-6932 Breganzona (TI)(CH)**

Inventor: **Zardi, Umberto**
**Via Lucino 57**
**CH-6900 Breganzona(CH)**
Inventor: **Pagani, Giorgio**
**Salita dei Frati 13**
**CH-6900 Lugano(CH)**

Representative: **Incollingo, Italo**
**AMMONIA CASALE S.A. Via della Posta 4**
**CH-6900 Lugano(CH)**

**System to obtain an optimal gas distribution in catalytic beds for heterogeneous reactions in gasseous phases.**

A system to obtain an optimal distribution of the synthesis gas in catalytic beds for heterogeneous reactions in converters, made up of a cylindrical pressure vessel with internal cartridge with catalyst, where the catalyst is arranged in at least two beds, each of which presents two cylindrical walls being permeable to gas co-axial amoung one another and to the the axis of the pressure vessel, the gas crossing the catalytic beds with inward or outward or radial flow or inward or outward axial-radial flow, and being distributed by means of inlet and outlet gas collectors, characterized by the fact that a set of distributors is provided, one for the gas inlet in the catalytic beds and one for the gas outlet, each distributor being made up of two cylindrical walls co-axial among one another and to the axis of the cylindrical pressure vessel, both permeable to gas; being the wall of the said distributor closer to the catalytic bed that has the largest cross section (more permeable to gas), while the other wall of each distributor shows: a) a smaller cross section with respect to the wall nearest to the catalyst, but always higher and such as to limit the charge loss across the same in fractions (perferably lower than nine decimals) of the charge loss of the catalytic bed itself (in the inlet gas distributor); b) a cross section narrower (lower permeability) and such as to create a charge loss at least equal to that of the inlet distributor (in the gas outlet distributor).

# SYSTEM TO OBTAIN AN OPTIMAL GAS DISTRIBUTION IN CATALYTIC BEDS FOR HETEROGENEOUS REACTIONS IN GASEOUS PHASES

## Background of the Invention

This invention refers to a system to obtain an optimal distribution of the synthesis gas in catalytic beds for heterogenous reactions in converters, made up of a cylindrical pressure vessel with internal cartridge with catalyst, where the catalyst is arranged in at least two beds, each of which presents two cylindrical walls permeable to gas co-axial among one another and to the axis of the pressure vessel, the gas crossing the catalytic beds with inward or outward radial flow or with inward or outward axial-radial flow, and being distributed through inlet and outlet gas collectors.

In particular it refers to catalytic beds with a great thickness, and a significative charge loss in the catalytic bed itself (f.i. 0.15÷0.6 kg/cm2).

The importance of a homogeneous distribution of synthesis gas in catalytic beds for reactions in a gaseous phase is well known, with the aim of obtaining the utmost efficiency and utilization of the catalyst and thus high reaction yields.

## Prior Art

There are numerous patents that describe systems of gas distribution in catalytic beds particularly in converters with radial flow. Even the Applicant has recently filed a patent that refers to a system to obtain an optimal distribution of the synthesis gas in catalytic beds with low charge loss (f.i. 0.015 kg/cm2).

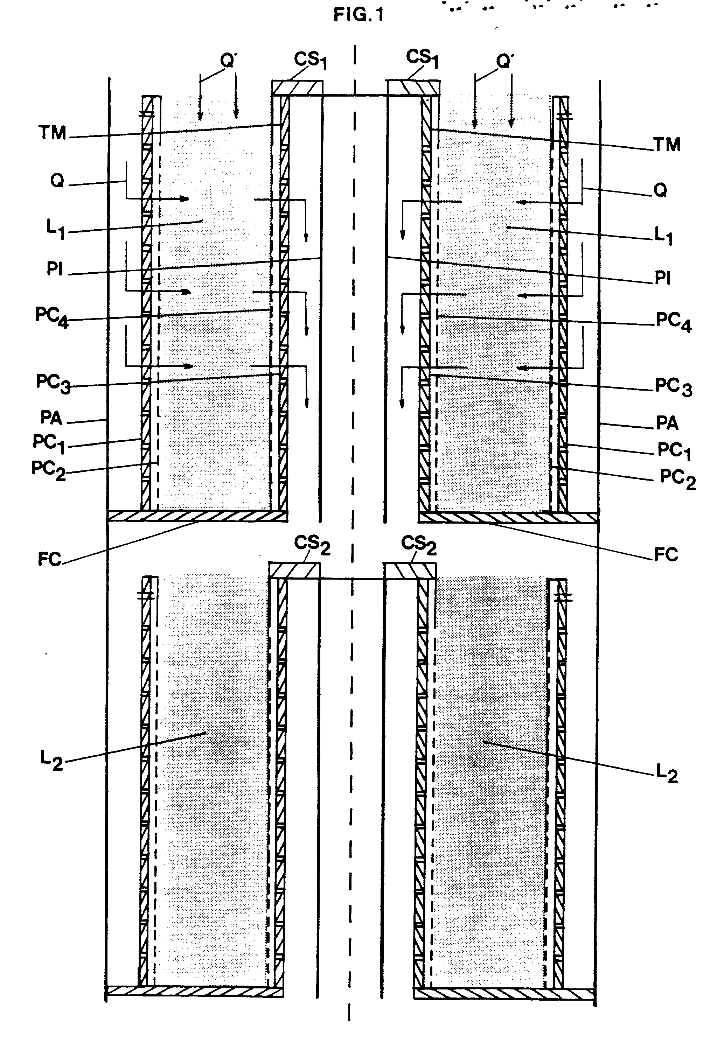

In converters made up by a cylindrical pressure vessel with internal cartridge with catalyst, where the catalyst is arranged in at least two beds, each of which presents two cylindrical walls permeable to gas co-axial amoung one another and to the axis ofthe pressure vessel, the gas crosses the catalytic beds with inward or outward radial flow or with inward or outward axial-radial flow, and being distributed by means of inlet and outlet gas collectors, each collector being generally made up by either central duct co-axial with the pressure vessel whose wall is constituted by the internal wall itself permeable to the gas of the catalytic beds as shown in Fig. 1 of the English Patent No. 1352550 (inlet collector with inward gas flow), or by an airspace between the cylindrical wall permeable to the gas and a solid unperforated wall (outlet gas collector as shown in Fig. 1 of said English Patent No. 1352550), or by a double wall permeable to the gas, one of which with a wider cross section 37 with direct contact or through a catalyst wire-net support of the catalytic bed (as shown in Fig. 5 of the English Patent No. 1118750(4), while the other wall 39 shows a cross section 40 for the gas which is notably inferior to the first, being destined to create a charge loss concentrated at least equal to that of the catalytic bed, with the aim of favouring a uniform gas distribution along the axis of the bed.

In practice, the radial converters used mostly nowadays adopt distributors for catalytic beds as described above, the inlet collector being made by a double wall permeable to gas, an internal 37 as indicated in Fig. 5 of the English Patent No. 1118750 closer to the catalytic bed, and an external 39 with a smaller gas cross section where a considerable charge loss takes place (more times than that which takes place in the catalytic bed), and thus some special devices have to be adopted as indicative in claim no 13 of the above mentioned Patent, in order to give the gas coming at a very high speed from the external distribution wall (consequent to the reduced cross section of the external wall itself), a direction parallel to the distribution walls, avoiding the direct impact with the permeable internal wall that could cause a bad gas distribution in the bed and damage the catalyst.

Always in the above mentioned converters the outlet collector does not generally present any concentrated charge loss, being as said above, the uniform distribution of the gas in the catalytic bed that allows the high charge loss on the external wall of the inlet collector.

With the above mentioned structure of distribution collectors, a very efficient closure (air-tight), mechanically very resistent to support the difference of pressure, is generally requested in the upper part of the bed, in order to avoid that a part of the gas bypasses the bed itself.

The object of this invention is a system to distribute the synthesis gas in catalytic beds for synthesis reactions in gaseous phases, with great thickness and significative charge loss in the bed itself, that allows a uniform and optimal gas distribution on the beds themselves, achieves high yields, and avoids the inconveniences described above of the systems known and utilized until today.

The said system is characterized by the fact that a set of distributors is provided, one for the gas inlet in the catalytic beds and one for the gas outlet, each distributor being made up of two cylindrical walls co-axial amoung one another and to the axis of the cylindrical pressure vessel, both permable to gas; being the wall of the said distributor closer to the catalytic bed the one with the largest cross section (more permeable to gas), while the other wall of each distributor shows: a) a smaller cross section with respect to the wall nearest to the catalyst, but always high and such as to limit the charge loss across the same in fractions (preferably lower than nine decimals) of the charge loss in the catalytic bed itself (in the gas inlet distributor); b) a narrower cross section (lower permeability) and such as to create a charge loss at least equal to that of the inlet distributor (in the gas outlet distributor).

The system according to the invention is applicable to converters with gas flow in radial catalytic beds or substantially radial catalytic beds (axial-radial beds according to the USA Patent No. 4372920 and No. 4405562) and is made up of a set of distributors, one for the gas inlet in the catalytic beds and one for the gas outlet, each distributor being made by two cylindrical walls co-axial amoung one another and to the axis of the cylindrical pressure vessel, both permeable to gas; being the wall of the said distributor closest to the catalytic beds the one with the largest cross section (more permeable to gas), while the other wall of each distributor shows: a) a smaller cross section with respect to the wall near the catalyst, but always high and such as to limit the charge loss across the same in fractions (preferibly lower than nine decimals) of the charge loss in the catalytic bed itself (in the gas inlet distributor); b) a cross section narrower (lower permeability) and such as to create a charge loss at least equal to that of the inlet distributro (in the gas outlet distributor).

The object of the invention can be more easily understood on the basis of the following description that has an exemplifying and not limitative character and that refers, for illustrative clarity, to the attached drawing wherein the Fig. 1 is a partial and schematic cross section with longitudinal, axial planes.

In Fig. 1 a set of annular beds L1 and L2 are - schematically shown in series with gas flow in beds Q, contained on the inside of the unperforated cylindrical wall PA, inward radial, being each bed constituted of: a) a set of distributors, one gas inlet made of two cylindrical, co-axial walls permeable to gas PC1 and PC2 being PC2 more permeable to the gas passage than PC1; one outlet made of two cylindrical, co-axial walls permeable to gas PC3 and PC4 being PC4 more permeable to the gas passage than PC3; b) a closed bottom FC arranged in the delimited space between the wall PC3 of the outlet collector as per point a) and the closed external wall PA.

The walls of the outlet collector (PC3 and PC4) are not generally permeable to the gas along a minor tract TM in correspondence to their upper edge (closed zone of the cylindrical walls).

In Fig. 1 a set of two beds are schematically shown wherein the major part of the gas Q crosses the beds with radial inward flow in correspondence to the major portion permeable to the gas in the collectors, and the remaining minor part of the gas Q' crosses the beds with substantially axial flow in correspondence to the minor portion TM of the collectors not permeable to the gas. the said minor portion of the gas penetrating the catalytic bed of the upper open cross section delimited by the two collectors.

### Example

1) In an ammonia synthesis reactor with two catalyst beds with inward radial gas flow realized as described in Fig. 1, the following operating conditions have been forseen:

1 - use of appropriate catalyst with irregular-shaped granules with the dimension of 1.5÷3 mm;

2 - gas charge loss in the catalytic bed of 0.15 kg/cm2;

3 - charge loss on the wall PC1 of the inlet collector of 0.005 kg/cm2  4 (charge loss on the wall PC2 of the inlet collector is negligible).

4 - charge loss on the wall PC3 of the outlet collector 0.01 kg/cm2 (charge loss on the wall PC4 negligible.

### Claims

1. A system to obtain an optimal distribution of the synthesis gas in catalytic beds for heterogeneous reaction in converters, made up of a cylindrical pressure vessel with internal cartridge with catalyst, where the catalyst is arranged in at least two beds, each of which presents two cylindrical walls permeable to gas co-axial amoung one another and to the axis of the pressure vessel, the gas crossing the catalytic beds with radial inward or outward flow or with axial-radial inward or outward flow, and being distributed by means of inlet and outlet gas collectors, characterized by the fact that a set of distributors is provided, one for the gas inlet in catalytic beds and for the gas outlet, each distributor being made up of two cylindrical walls co-axial amoung one another and to the axis of the cylindrical pressure vessel, both permeable to the gas; being the wall of the said distributors nearest to the catalytic bed with the largest cross section (more permeable to gas), while the other wall of each distributor presents: a) a smaller cross section with respect to the wall closest to the catalyst, but always high and such as to limit the charge loss across the same in fractions (preferably lower than nine decimals) of the charge loss in the catalytic bed itself (in the inlet gas distributor): b) a cross section narrower (lower permeability) and such to create a charge loss at least equal to that of the inlet distributor (in the gas outlet distributor).

0 285 887

FIG. 1